# EUROPÄISCHE PATENTSCHRIFT

(11) **EP 0 561 395 B1**
(45) Veröffentlichungstag und Bekanntmachung des Hinweises auf die Patenterteilung: **04.10.1995**
(21) Anmeldenummer: 93104406.9
(22) Anmeldetag: 18.03.1993
(51) Int. Cl.: B23B 31/117

(54) **Spannfutter**
Chuck
Mandrin

(30) Priorität: 20.03.1992 DE 4209175
(43) Veröffentlichungstag der Anmeldung: 22.09.1993
(73) Patentinhaber: IMT INGENIEURGEMEINSCHAFT FÜR MOTOREN-TECHNIK GmbH, D-74257 Untereisesheim (DE)
(72) Erfinder: Ruf, Max, W-7107 Neckarsulm 5 (DE)
(74) Vertreter: Speidel, Eberhardt

(56) Entgegenhaltungen:
- AT-B- 385 224
- DE-A- 3 517 246
- US-A- 4 721 423
- PATENT ABSTRACTS OF JAPAN vol. 7, no. 12 (M-186)(1157) 19. Januar 1983 & JP-A-57 168 805 (SEIWA) 18 Oktober 1982

## Beschreibung

Die Erfindung betrifft ein Spannfutter entsprechend dem Oberbegriff des Anspruchs 1.

Bei derartigen, auch als Rollkupplungsfutter bezeichneten und beispielsweise aus der DE-A 36 00 994 bekannten Spannfuttern wird zum Festspannen des in die Hülse eingesteckten Werkzeuges der Spannzylinder mittels eines Schraubenschlüssels gedreht und er schiebt sich aufgrund der schräg angeordneten Nadelrollen auf die konische Außenfläche der Spannhülse auf, wodurch diese zusammengedrückt wird und das Werkzeug festklemmt.

Der Erfindung liegt die Aufgabe zugrunde, die Wirksamkeit des Spannzylinders eines gattungsgemäßen Spannfutters verbessern.

Erfindungsgemäß ist das vordere Ende einer Spannhülse der oben genannten Art mit einem Außengewinde versehen, auf das ein Anschlagring aufschraubbar ist, der an einer Schulter am vorderen Ende des Spannzylinders anliegt und eine axiale Vorspannung auf den Spannzylinder ausübt.

Dadurch wird erreicht, daß beim Zusammenbau des Spannfutters der Spannzylinder durch entsprechendes Aufschrauben des Anschlagringes leicht auf die Spannhülse aufgedrückt wird, so daß nach dem Einführen des Werkzeuges in die Spannhülse ein Drehen des Spannzylinders in der einen Richtung sofort eine Axialverschiebung desselben und damit ein Zusammendrücken der Spannhülse bewirkt. Der Anschlagring dient außerdem dazu, ein Abrutschen des Spannzylinders von der Spannhülse zu verhindern. Nach dem Einstellen der axialen Vorspannung wird der Anschlagring vorzugsweise durch einen Kleber gegen Drehung gesichert.

Zur Freigabe des Werkzeuges wird der Spannzylinder in der anderen Richtung gedreht, wobei er sich aufgrund der Schräglage der Nadelrollen in Richtung auf das vorderen Ende der Spannhülse verschiebt, was zur Folge hat, daß sich die Spannhülse ausdehnen kann und das Werkzeug freigibt.

Um einen schnellen Werkzeugwechsel zu ermöglichen, wird die Spindel der Werkzeugmaschine abgebremst. Dieses Abbremsen bewirkt eine entsprechende Verzögerung der Drehung der Spannhülse, die eine Drehung des Spannzylinders relativ zu der Spannhülse und eine Axialverschiebung desselben im Sinne einer Entlastung der Hülse zur Folge haben kann. Das Werkzeug ist dann nicht mehr festgehalten und kann aus dem Spannfutter herausfallen und aufgrund der noch fortdauernden Drehung des Spannfutters beschädigt werden oder erhebliche Schäden verursachen und die Umgebung grfährden. Um dies zu vermeiden, ist vorzugsweise zwischen dem rückwärtigen Ende des Spannzylinders und dem Kupplungskörper eine in der Spannstellung wirksame, lösbare Arretierung vorgesehen, die verhindert, daß der Spannzylinder sich beim einem Abbremsen des Spannfutters gegenüber der Spannhülse verschieben kann.

Nach einem ersten Vorschlag kann die Arretierung einen Sperrkörper aufweisen, der verschiebbar in einer radialen, nach außen zu offenen Bohrung im Spannzylinder angeordnet ist und in der Spannstellung des Spannzylinders in eine Vertiefung einrastet, die in einem das rückwärtige Ende des Spannzylinders übergreifenden zylindrischen Fortsatz des Kupplungskörpers vorgesehen ist. Der Sperrkörper wird durch die Fliehkraft in seiner Raststellung gehalten. Zusätzlich kann in der Bohrung eine Feder vorgesehen sein, die den Sperrkörper nach außen drückt. Zum Lösen der Arretierung wird der Spannzylinder bei stillstehendem Spannfutter unter Überwindung der schwachen Federkraft axial verschoben. Der Sperrkörper ist vorzugsweise eine Kugel, und die Vertiefung kann von einer Ringnut gebildet sein, um in jeder Position des Spannzylinders ein Einrasten der Kugel sicherzustellen. Um erkennen zu können, daß der Sperrkörper eingerastet ist, kann auf der Außenfläche des Spannzylinders eine Markierung vorgesehen werden, die in der Spannstellung des Spannzylinders mit der Vorderkante des Kupplungskörpers fluchtet.

Nach einem zweiten Vorschlag wird die Arretierung des Spannzylinders in seiner Spannstellung dadurch erreicht, daß das rückwärtige Ende des Spannzylinders mit einer auf ein Außengewinde am Kupplungskörper aufgeschraubten Kontermutter zusammenwirkt. Diese Ausführung hat den zuätzlichen Vorteil, daß der Spannzylinder an seinem rückwärtigen Ende radial abgestützt ist, so daß er die durch den Schnittdruck auf das Werkzeug und damit auf die Spannhülse ausgeübte Seitenkraft aufnehmen kann. Die Präzision des Spannfutters wird dadurch erheblich verbessert. Eine besonders wirksame radiale Fixierung des rückwärtigen Endes des Spannzylinders wird erreicht, wenn die zusammenwirkenden Flächen des Spannzylinders und der Kontermutter konisch bzw. hohlkegelförmig ausgebildet sind.

Zwei Ausführungsbeispiele der Erfindung werden im folgenden unter Bezugnahme auf die Zeichnungen beschrieben. Es zeigt:

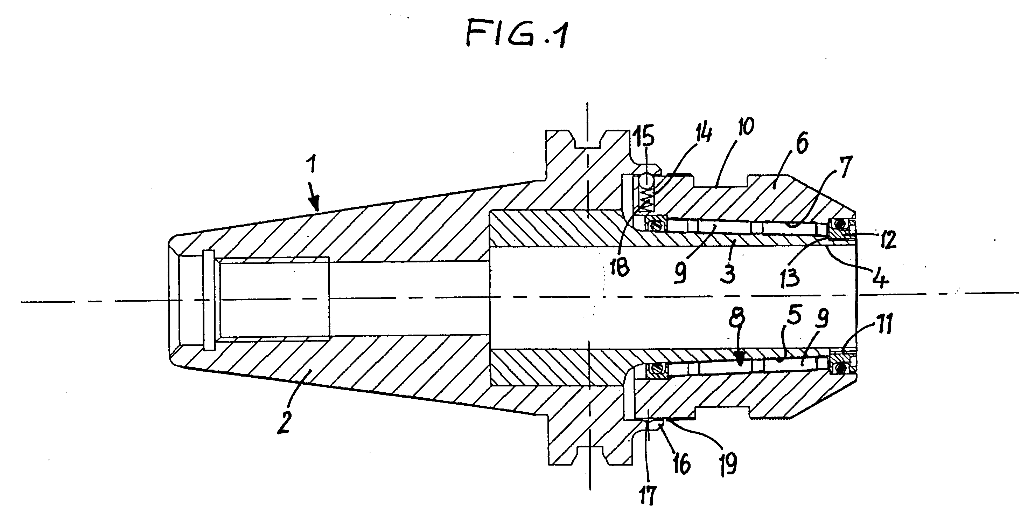

- Fig. 1: einen Längsschnitt eines Spannfutters in einer ersten Ausführung, und
- Fig. 2: einen Längsschnitt eines Spannfutters in einer zweiten Ausführung.

Mit 1 ist ein Kupplungsköper bezeichnet, der einen Steilkegelabschnitt 2 aufweist, welcher in die Spindel einer Werkzeugmaschine eingesetzt wird. Mit dem Kupplungskörper 1 ist eine verformbare Spannhülse 3 verbunden, die eine Längsbohrung 4 zur Aufnahme eines Werkzeuges aufweist. Die Spannhülse 3 hat eine konische Außenfläche 5, auf der ein Spannzylinder 6 drehbar ist, der eine zur Außenfläche 5 der Spannhülse 3 parallele, konische Innenfläche 7 aufweist. Zwischen den konischen Flächen 5 und 7 ist ein mehrreihiges Nadellager 8 vorgesehen, dessen Nadeln 9, wie bekannt, schräg zu den Mantellinien der konischen Flächen angeordnet sind, so daß bei einer Drehung des Spannzylinders 6 in der einen Richtung der Spannzylinder auf die Spannhülse 3 aufgeschoben, also in der Zeichnung nach links verschoben wird, wodurch die Spannhülse 3 zusammengedrückt wird und das Werkzeug festklemmt. Bei Drehung des Spannzylinders 6 in der anderen Richtung wird dieser in der Zeichnung nach rechts verschoben, wodurch die Spannhülse 3 entlastet wird und das Werkzeug freigibt. Das Drehen des Spannzylinders erfolgt mit Hilfe eines Schraubenschlüssels, der an Flächen 10 am Spannzylinder angreift.

Das vordere Ende der Spannhülse 3 ist mit einem Außengewinde 11 versehen, auf das ein Anschlagring 12 aufgeschraubt ist, der an einer Schulter 13 am vorderen Ende des Spannzylinders 6 anliegt, wenn der Spannzylinder nicht in seiner Spannstellung ist. Mit diesem Anschlagring 12 wird beim Zusammenbau des Spannfutters auf den Spannzylinder 6 eine axiale Kraft ausgeübt, die eine schwache Anfangs-Klemmkraft zwischen dem Spannzylinder 6 und dem Nadellager 8 bewirkt, so daß beim Drehen des Spannzylinders 6 sofort eine axiale Verschiebung desselben eintritt und eine Klemmkraft auf die Spannhülse 3 ausgeübt wird. Der Anschlagring 12 verhindert außerdem ein Abgleiten des Spannzylinders von der Spannhülse. Der Anschlagring 12 wird beim Zusammenbau des Spannfutters so weit aufgeschraubt, bis die gewünschte Vorspannung der Spannhülse 6 erreicht ist, und dann durch einen Kleber gegen Drehung fixiert. Da durch die Vorspannung eine geringfügige Verformung der Spannhülse 6 eintritt, wird die Bohrung 4 nun genau zentrisch bearbeitet, um einen einwandfreien Rundlauf des in die Bohrung 4 eingesetzten Werkzeuges sicherzustellen.

Um ein ungewolltes Entspannen der Spannhülse 3 beim Abbremsen des Spannfutters zu verhindern, ist zwischen dem Spannzylinder 6 und dem Kupplungskörper 1 eine lösbare Arretierung vorgesehen. Zu diesem Zweck ist nahe seines rückwärtigen Endes im Spannzylinder 6 eine radiale, nach außen zu offene Bohrung 14 vorgesehen, in der eine Sperrkugel 15 verschiebbar, jedoch gegen Herausfallen gesichert, angeordnet ist. Der Kupplungskörper 1 ist mit einem zylindrischen Fortsatz 16 versehen, der das rückwärtige Ende des Spannzylinders 6 übergreift und an seiner Innenfläche eine Ringnut 17 aufweist, in welche die Sperrkugel 15 in der Spannstellung des Spannzylinders 6 eingreift. Die Sperrkugel 15 wird in erster Linie durch die Fliehkraft und zusätzlich durch eine schwache Feder 18 in ihre Sperrstellung gebracht. Die Sperrkugel 15 verhindert, daß sich der Spannzylinder 6 beim Abbremsen des Kupplungskörpers 1 axial nach außen verschieben kann, wodurch die Klemmkraft verringert würde. Da im Stillstand keine Fliehkraft auf die Sperrkugel 15 wirkt, kann der Spannzylinder 6 beim Drehen zur Entlastung der Spannhülse ohne große Kraftanstrengung gleichzeitig axial nach außen gezogen werden, um die Sperrkugel 15 außer Eingriff mit der Ringnut 17 zu bringen. An der Außenfläche der Spannhülse 6 kann eine Markierung, z.B. ein Absatz 19, vorgesehen sein, der in der Spannstellung der Spannhülse 6 mit der Vorderkante des Fortsatzes 16 fluchtet. Dadurch ist erkennbar, ob die Sperrkugel 15 in die Ringnut 17 eingerastet ist.

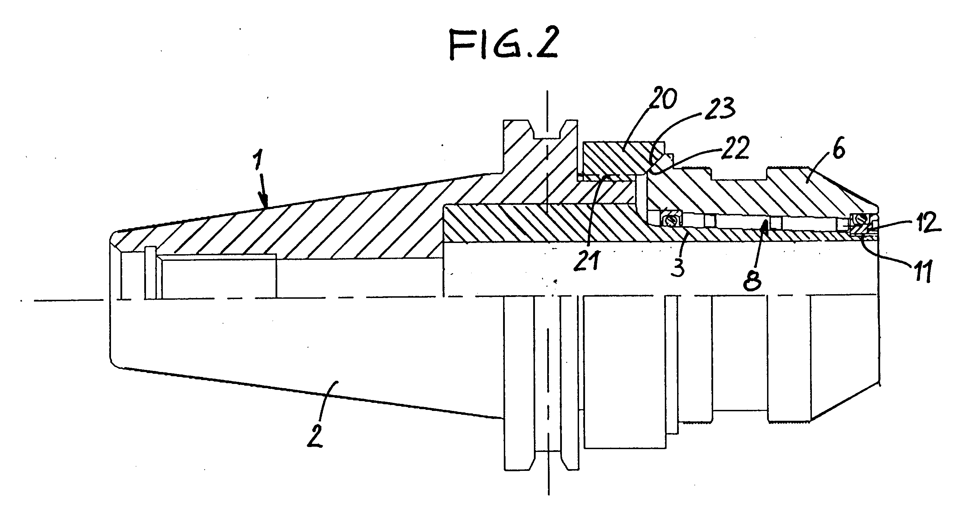

Bei dem Ausführungsbeispiel gemäß Fig. 2 erfolgt die lösbare Arretierung der Spannhülse 6 in der Spannstellung mit Hilfe einer Kontermutter 20. Diese Kontermutter 20 ist auf ein Außengewinde 21 am Kupplungskörper 1 aufgeschraubt und wirkt mit dem rückwärtigen Ende der Spannhülse 6 zusammen. Die Kontermutter 20 klemmt den Spannzylinder nicht nur fest, sondern sie bewirkt auch eine radiale Fixierung oder Abstützung des rückwärtigen Endes des Spannzylinders. Dadurch kann der Spannzylinder 6 die auf die Spannhülse 3 wirkenden Seitenkräfte, die von dem auf das Werkzeug wirkenden Schnittdruck herrühren, aufnehmen, so daß eine Durchbiegung der Spannhülse vermieden und ein einwandfreier Rundlauf des Werkzeuges sichergestellt ist. Eine besonders wirksame radiale Abstützung des Spannzylinderendes wird erreicht, wenn die miteinander zusammenwirkenden Flächen 22 und 23 des Spannzylinders und der Kontermutter 20, wie dargestellt, konisch bzw. hohlkegelförmig sind.

## Patentansprüche

1. Spannfutter mit
- einem in die Futteraufnahme einer Werkzeugmaschine einsetzbaren Kupplungskörper (1),
- einer mit dem Kupplungsköper einstückigen oder verbundenen, eine konische Außenfläche (5) aufweisenden, verformbaren Spannhülse (3) zur Aufnahme eines Werkzeuges,
- einem auf der Spannhülse drehbaren Spannzylinder (6) mit einer konischen, zur Außenfläche der Spannhülse parallelen Innenfläche (7), und
- einem Nadelllager (8) zwischen der Außenfläche der Spannhülse und der Innenfläche des Spannzylinders mit in einer oder mehreren Reihen angeordneten Nadelrollen (9), die in einem Winkel zu den Mantellinien der konischen Flächen verlaufen und die Spannhülse bei Drehung des Spannzylinders in der einen Richtung zusammenspannen und bei Drehung in der anderen Richtung entlasten,
dadurch gekennzeichnet daß
- das vordere Ende der Spannhülse (3) ein Außengewinde (11) aufweist, auf das ein Anschlagring (12) aufschraubbar ist, der an einer Schulter (13) am vorderen Ende des Spannzylinders (6) anliegt und eine axiale Vorspannung auf den Spannzylinder ausübt.

2. Spannfutter nach Anspruch 1, dadurch gekennzeichnet, daß der Anschlagring (12) nach dem Aufschrauben durch einen Kleber gegen Drehung gesichert ist.

3. Spannfutter nach Anspruch 1, dadurch gekennzeichnet, daß zwischen dem rückwärtigen Ende des Spannzylinders (6) und dem Kupplungskörper (1) eine in der Spannstellung des Spannzylinders wirksame, lösbare Arretierung vorgesehen ist.

4. Spannfutter nach Anspruch 3, dadurch gekennzeichnet, daß die Arretierung einen Sperrkörper (15) aufweist, der verschiebbar in einer radialen, nach außen zu offenen Bohrung (14) im Spannzylinder angeordnet ist und daß der Kupplungskörper (1) einen zylindrischen, das rückwärtige Ende des Spannzylinders in dessen Spannstellung übergreifenden Fortsatz (16) aufweist, in dessen Innenfläche eine Vertiefung (17) vorgesehen ist, in welche der Sperrkörper in der Spannstellung des Spannzylinders einrastet.

5. Spannfutter nach Anspruch 4, dadurch gekennzeichnet, daß in der Bohrung (14) eine den Sperrkörper (15) nach außen drückende Feder (18) angeordnet ist.

6. Spannfutter nach Anspruch 4 oder 5, dadurch gekennzeichnet, daß der Sperrkörper (15) eine Kugel ist.

7. Spannfutter nach Anspruch 4, dadurech gekennzeichnet, daß auf der Außenfläche des Spannzylinders (6) eine Markierung (19) vorgesehen ist, die in der Spannstellung des Spannzylinders mit der Vorderkante des Kupplungskörper-Fortsatzes (16) fluchtet.

8. Spannfutter nach Anspruch 3, dadurch gekennzeichnet, daß das rückwärtige Ende des Spannzylinders (6) in der Spannstellung mit einer auf ein Außengewinde (21) am Kupplungskörper (1) aufgeschraubten Kontermutter (20) zusammenwirkt.

9. Spannfutter nach Anspruch 8, dadurch gekennzeichnet, daß die zusammenwirkenden Flächen (22,23) des Spannzylinders (6) und der Kontermutter (20) konisch bzw. hohlkegelförmig ausgebildet sind.

## Claims

1. A clamping chuck comprising
- a coupling member (1) which can be inserted into the chuck receiver of a machine tool,
- a deformable clamping sleeve (3) for receiving a tool, said sleeve having a tapered outer surface (5) and being one-piece with or connected to the coupling member,
- a clamping cylinder (6) which is rotatable on the clamping sleeve and has a tapered inner surface (7) parallel to the outer surface of the clamping sleeve, and
- a needle bearing (8) between the outer surface of the clamping sleeve and the inner surface of the clamping cylinder comprising needle rollers (9) which are arranged in one or several rows and are oriented in an angle to the generating lines of the tapered surfaces and which contract the clamping sleeve on rotation of the clamping cylinder in one direction and relieve the clamping sleeve on rotation of the clamping cylinder in the other direction,
characterized in that
- the leading end of the clamping sleeve (3) has an external thread (11) onto which a stop ring (12) can be screwed which abuts a shoulder (13) at the leading end of the clamping cylinder (6) and exerts an axial pretension on the clamping cylinder.

2. The clamping chuck according to claim 1 characterized in that the stop ring (12) is secured against rotation by a cement after being screwed on.

3. The clamping chuck according to claim 1 characterized in that a disengageable lock which is effective in the clamping position of the clamping cylinder is arranged between the backward end of the clamping cylinder (6) and the coupling member (1).

4. The clamping chuck according to claim 3 characterized in that the lock comprises a catch member (15) which is slidably arranged within a radial bore (14) in the clutch cylinder open outwards, and that the coupling member (1) comprises a cylindrical extension (16) which overlaps the backward end of the clamping cylinder in its clamping position, the inner surface of the extension having a depression (17) into which the catch member latches when the clamping cylinder is in its clamping position.

5. The clamping chuck according to claim 4 characterized in that a spring (18) is arranged within the bore (14) which urges the catch member (15) outwards.

6. The clamping chuck according to claim 4 or 5 characterized in that the catch member (15) is a ball.

7. The clamping chuck according to claim 4 characterized in that on the outer surface of the clamping cylinder (6) there is provided a mark (19) which is flush with the forward edge of the coupling member extension (16) when the clamping cylinder is in its clamping position.

8. The clamping chuck according to claim 3 characterised in that in the clamping position the backward end of the clamping cylinder (6) cooperates with a lock nut (20) screwed on an external thread (21) at the coupling member (1).

9. The clamping chuck according to claim 8 characterized in that the cooperating surfaces (22,23) of the clamping cylinder (6) and the lock nut (20) are tapered and internally tapered, resp..

## Revendications

1. Mandrin de serrage comportant
- une pièce d'accouplement (1) pouvant être inserée dans le porte-mandrin d'une machine-outil,
- un machnon de serrage (3) déformable, exécuté en une pièce avec ou joint a cette pièce d'accouplement (1), présentant une surface extérieure conique (5) destiné à recevoir un outil,
- un cylindre de serrage (6) tournant sur le machon de serrage et présentant une surface intérieure conique (7) parallèle à la surface extérieure du manchon de serrage, et
- un palier à aiguilles (8) prévu entre la surface extérieure du manchon de serrage et la surface intérieure du cylindre de serrage et muni de galets à aiguilles (9) disposées en une ou plusieures rangées qui s'étendent angulairement par rapport aux génératrices des surfaces coniques de telle sorte qu'ils serrent le manchon de serrage lorsque le cylindre de serrage tourne dans une direction et le désserrent lors de la rotation de ce dernier en sens inverse, charactérisé en ce que
- l'extrémité avant du manchon de serrage (3) présente un filetage (11) sur lequel un anneau de butée (12) peut être vissé qui prend appui sur un épaulement (13) à l'extrémité avant d'un cylindre de serrage (6) et exerçant sur ce dernier un serrage initial en direction axiale.

2. Mandrin de serrage selon revendication 1, caractérisé en ce que l'anneau de butée (12), une fois vissée, est assuré contre rotation par un adhésif.

3. Mandrin de serrage selon revendication 1, caractérisé en ce qu'un dispositif d'arrêt relâchable étant actif dans la position de serrage du cylindre de serrage (6) est prévu entre l'extrémité arrière de ce dernier et la pièce d'accouplement (1).

4. Mandrin de serrage selon revendication 3, caractérisé en ce que le dispositif d'arrêt comprend un corps de blocage (15) logé de manière déplaçable dans un alésage (14) radial ouvert en direction de l'extérieur prévu dans le cylindre de serrage et que la pièce d'accouplement (1) comporte un prolongement (16) cylindrique s'étendant sur l'extrémité arrière du cylindre de serrage quand celui-ci se trouve dans sa position de serrage et portant à sa surface intérieure une rainure (17) dans laquelle le corps de blocage vient s'encliqueter lors de ladite position de serrage du cylindre de serrage.

5. Mandrin de serrage selon revendication 4, caractérisé en ce qu'un ressort (18) est prévu dans l'alésage (14) pressant le corps de blocage (15) vers l'extérieur.

6. Mandrin de serrage selon revendication 4 ou 5, caractérisé en ce que le corps de blocage (15) est une bille.

7. Mandrin de serrage selon revendication 4, caractérisé en ce que la surface extérieure du cylindre de serrage (6) porte un repère (19) qui vient s'aligner avec l'arête avant du prolongement (16) de la pièce d'accouplement quand le cylindre de serrage se trouve dans sa position de serrage.

8. Mandrin de serrage selon revendication 3, caractérisé en ce que l'extrémité arrière du cylindre de serrage (6) coopère en position de serrage avec un contre-écrou (20) vissé sur un filetage (21) de la pièce d'accouplement (1).

9. Mandrin de serrage selon revendication 8, caractérisé en ce que les surfaces coopérantes (22, 23) du cylindre de serrage (6) et du contre-écrou (20) sont executées en forme conique et cône creux respectivement.
